# EUROPEAN PATENT SPECIFICATION

(11) **EP 2 750 876 B1**
(45) Date of publication and mention of the grant of the patent: **26.10.2016**
(21) Application number: 12826821.6
(22) Date of filing: 31.08.2012
(51) Int. Cl.: B32B 3/24, A47J 31/06, B32B 33/00, B65D 65/38

(54) **MULTILAYERED MATERIAL AND CONTAINERS AND METHOD OF MAKING SAME**
MEHRLAGIGES MATERIAL UND BEHÄLTER UND HERSTELLUNGSVERFAHREN DAFÜR
MATÉRIAU MULTICOUCHE ET CONTENANTS, PROCÉDÉ DE FABRICATION CORRESPONDANT

(30) Priority: 01.09.2011 US 201161530026 P
(43) Date of publication of application: 09.07.2014
(73) Proprietor: 2266170 Ontario, Inc., Mississauga, Ontario L4Y 1S4 (CA)
(72) Inventor: TROMBETTA, Liberatore A., Ancaster, Ontario L9G 4X6 (CA); FU, Yucheng, Guelph, Ontario N1G 2V7 (CA); PAYNTER, Dennis Dwight, Grapevine, Texas 7605 (US); KHAN, Daud Ahmed, Whitby, Ontario L1R 2V8 (CA)
(74) Representative: Nederlandsch Octrooibureau
(86) International application number: PCT/CA2012/050605
(87) International publication number: WO 2013/029184

(56) References cited:
- WO-A1-2010/106516
- WO-A1-2010/106516
- WO-A1-2010/128844
- WO-A1-2010/137956
- JP-A- H11 171 249
- US-A1- 2008 202 075
- US-A1- 2008 202 075
- US-A1- 2010 239 733

## Description

### FIELD

The described embodiments relate to multilayered materials and containers and methods of making same and in particular to multilayered materials and containers and methods of making same having improved barrier properties, manufacturing efficiencies or other advantages over conventional multilayered materials and containers.

### BACKGROUND

The following background discussion is not an admission that anything discussed below is citable as prior art or common general knowledge.

Containers for food or other environmentally sensitive products often are formed of multilayered materials that include one or more barrier layers providing barriers against one or more environmental factors such as light, oxygen, and moisture. Oxygen sensitive products, for example, may be contained within packaging having an oxygen barrier layer. The air within the container may be evacuated and/or replaced with an inert gas such as nitrogen prior to sealing the container. This provides the packaged product with an extended shelf life. Generally, the better the barrier protection for the container the longer the shelf life.

A weak point for such containers, in terms of barrier protection, is the seal used for sealing one or more multilayered materials together to contain the food or other perishable products within the container. A perforated layered film for packaging of powdered material, capable of forming a barrier to moisture is shown in US2008/0202075.

Coffee pods for instance may be contained in bags or pouches formed of a sheet of multilayered material that is folded and sealed along edge seams to define an enclosed space for containing the coffee pods. The sheet of multilayered material is typically formed of an outer layer of a transparent protective material (outer base layer) such as polyolefin or polyester, a middle layer of a graphics material (graphics layer) such as ink applied to another middle layer of a barrier material (barrier layer) such as aluminum foil, metalized polyester or Ethylene Vinyl Alcohol (EVOH) and an inner layer of a sealing material (sealing layer) such as Polyethylene (PE) or Polypropylene (PP). The barrier layer in particular acts as a barrier for restricting the passage of oxygen.

The edge seams for such containers are typically formed by heat sealing (also known as welding) the sealing layer of one edge portion of the sheet to the sealing layer of another edge portion of the sheet. Heat sealing may be accomplished through a variety of techniques, such as by direct contact using heated work pieces or by indirect contact using ultrasonic waves, to heat one or both of the respective layers or surfaces to a sufficient melt temperature to form a seal, bond or weld.

The edge seams of such containers typically comprise a double layer of sealing material. Sealing materials such as PE and PP have inferior barrier properties compared to the barrier properties of barrier materials such as aluminum foil, metalized polyester or EVOH. The combined sealing layers are exposed to oxygen along the seam and thus are a weak point in terms of barrier protection.

Another example is a single serve beverage capsule formed of multilayered materials and containing a desired dosage of coffee grounds, tea leaves or other desired ingredients. Such capsules typically comprise a cup shaped body that contains the desired ingredients and a cover that is heat sealed to a lip of the body. Such capsules may also contain a filter that is typically adhered to an interior facing surface of the body so as not to interfere with the seal between the cover and the body. Such a capsule is shown in WO2010/128844.

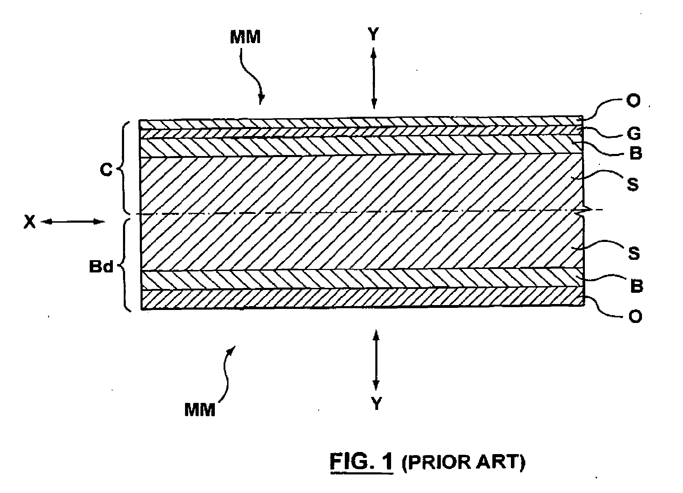

A sealed edge for a conventional beverage capsule is shown in Figure 1 (Prior Art). The multilayered material MM for the body Bd of such capsules is typically formed of an outer base layer 0 of Polystyrene (PS), a barrier layer B of EVOH and a sealing layer S of PE or PP. The barrier layer B of EVOH in particular acts as a barrier for restricting passage of oxygen. The multilayered material MM for the cover C of such capsules is typically formed of an outer base layer O of polyethylene terephthalate (PET), a graphics layer G of ink applied to a barrier layer B of aluminum foil and a sealing layer S of PE or PP, The barrier layer B of aluminum foil in particular acts as a barrier for restricting passage of oxygen.

The sealing layer S of the cover C is typically heat sealed to the sealing layer S on the lip of the body Bd to form a seal. The resultant seal formed of materials such as PE or PP over the width of the lip provides an inferior barrier to undesired elements such as oxygen along the plane of the seal in the direction of arrow X as compared to the barrier provided transversely in the direction of arrow Y through barrier layers B formed of materials such as PET.

Adhering the filter to an interior facing surface of the body of such single serve beverage capsules presents additional disadvantages including manufacturing inefficiencies as well as challenges associated with adhering to a sidewall that is weakened due to stretching of the body material through thermoforming.

There is a need for multilayered barrier materials and containers formed of such materials that address the above problems or that otherwise provide advantages over conventional multilayered barrier materials and containers.

### SUMMARY

In one aspect the invention provides
a beverage capsule for use
in a beverage preparing machine.

The beverage capsule comprises:
a body having a side wall extending from an end wall to an opening to define an interior space, said opening being surrounded by a flange;
a filter disposed in said body to define an ingredients chamber between said opening and said filter;
one or more ingredients disposed in said ingredients chamber for preparing a desired beverage; and
a cover for covering said opening;
said filter including a gasket portion disposed between said flange and said cover, said gasket portion having a plurality of channels containing a sealing material adapted for sealing said gasket portion between said flange and said cover.

In another aspect the invention provides a method for making a beverage capsule for use in a beverage preparing machine.

The method comprises the steps of:
heat sealing a gasket portion of a moldable filter to a flange of a body, said body having a side wall extending from an end wall to an opening to define an interior space, said opening being surrounded by said flange;
molding said filter to a desired shape within said interior space to define an ingredients chamber between said opening and said filter;
filling said ingredients chamber with a desired amount of ingredients; and
heat sealing a cover to said gasket portion for covering said opening;
wherein said body and said cover each comprise a multilayer material having (i) a barrier layer formed of a material adapted for deterring one or more undesired elements from passing through the barrier layer and (ii) a sealing layer formed of a material adapted for sealing to another surface;
and wherein said gasket portion has a plurality of channels for receiving at least a portion of said sealing material for said body and said cover, said gasket portion having a higher melt temperature than said sealing layer of said body and said cover.

Other aspects and features of the teachings disclosed herein will become apparent, to those ordinarily skilled in the art, upon review of the following description of the specific examples of the specification.

### DRAWINGS

The drawings included herewith are for illustrating various examples of articles, methods, and apparatuses of the present specification and arc not intended to limit the scope of what is taught in any way.

For simplicity and clarity of illustration, where considered appropriate, reference numerals may be repeated among the drawings to indicate corresponding or analogous elements.
Figure 1 (Prior Art) is a schematic sectional view of the edge seam of a conventional beverage capsule;
Figure 2 is an enlarged schematic perspective view of a multilayered material for use in the present invention;
Figure 3 is a schematic sectional view of the multilayered material of Figure 2 as viewed along lines 3-3;
Figure 4 is a schematic sectional view of another multilayered for use in the present invention;
Figure 5 is a schematic sectional view of a further multilayered material for use in the present invention;
Figure 6 is a schematic sectional view of a yet further multilayered material for use in the present invention;
Figure 7 is a perspective view of a multilayered material that is folded to form a container falling outside the scope of the present invention;
Figure 8 is a sectional view of a seam for the container formed of the multilayered material as shown in Figure 7;
Figure 9 is an exploded perspective view of a multilayered material that is folded to form a container together with gasket strips falling outside the scope of the present invention;
Figure 10 is a sectional view of a seam for the container formed of the multilayered material and gasket strips as shown in Figure 9;
Figure 11 is an exploded sectional view of a container in accordance with the present invention; and
Figure 12 is an exploded sectional view of a container in accordance with another embodiment of the present invention.

### DESCRIPTION OF VARIOUS EMBODIMENTS

Various apparatuses or methods will be described below to provide examples of the claimed invention. The claimed invention is not limited to apparatuses or methods having all of the features of any one apparatus or method described below or to features common to multiple or all of the apparatuses described below. The claimed invention may reside in a combination or subcombination of the apparatus elements or method steps described below. It is possible that an apparatus or method described below is not an example of the claimed invention.

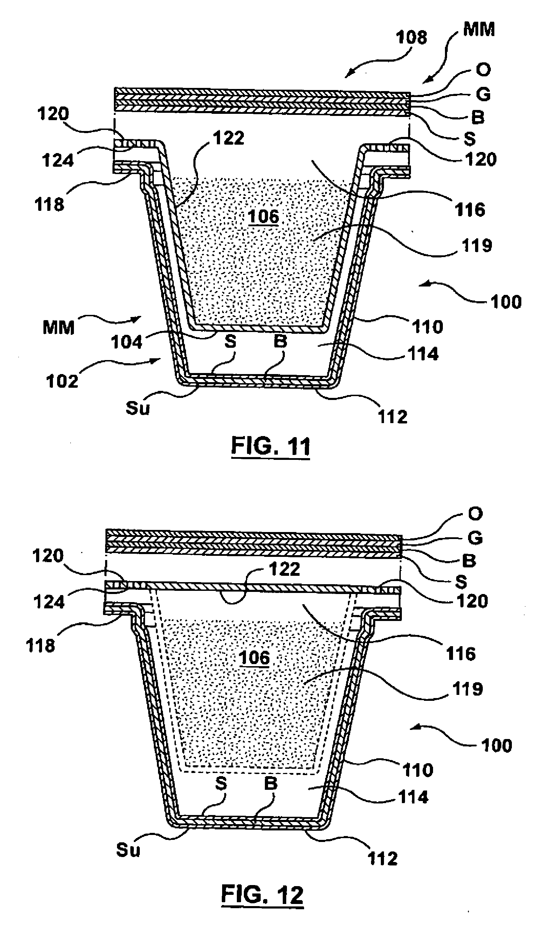

A multilayered material for use in the present invention is shown generally at 20 in the Figures. Multilayer material comprises a barrier layer 22 and a sealing layer 24. Multilayer material may also include a gasket layer 26 or this may be provided as a separate element when multilayer material is formed into a container 50 as described further below. Multilayer material may also include one or more other desired layers as known in the art such as a graphics layer 28, an outer base layer 30 and a support layer Su (as shown for example in figures 11 and 12).

Barrier layer 22 is formed of a material, as known in the art, that is adapted to provide barrier protection to deter one or more undesired elements, such as oxygen, light or moisture, from permeating through multilayered material 20 and in particular is adapted to deter permeation of undesired elements transversely through the plane of barrier layer 22 as depicted by arrow Y, Barrier materials may include metals, such as metallic foils and metallized polyesters, polymers or copolymers, such as Ethylene Vinyl Alcohol (EVOH), as well as other materials known to provide barrier properties.

Sealing layer 24 is formed of a material that is adapted to form a seal with another surface for instance by way of a heat seal (or weld) using one of a variety of techniques, such as by direct contact using heated work pieces or by indirect contact using ultrasonic waves, to heat one or both of the respective layers or surfaces to a sufficient melt temperature to form a seal, bond or weld. Multilayer material 20 may thus be folded and sealed to itself or to another material, such as another multilayered material, to form a container as described further below. The material for sealing layer 24 is also preferably adapted to be exposed to the contents of container without negatively impacting such contents. For example, if the contents of container are food products, sealing layer 24 is preferably formed of an approved food grade material. Sealing materials may include polyethylene (PE) or polypropylene (PP) or other materials with sealing properties.

Gasket layer 26 is formed of a material having a plurality of channels 34 that extend at least partway and preferably extend fully through gasket layer 26. Channels 34 are adapted to receive at least a portion of the material of sealing layer 24 and preferably allow the material of sealing layer 24, when heated to its melt temperature, to flow through channels 34 from one side of gasket layer to the other. Gasket layer 26 preferably is formed of a material having superior barrier properties compared to the barrier properties of the material of sealing layer 24.

Gasket layer 26 may also or alternatively be adapted to provide other benefits to multilayered material 20 or to containers formed of multilayered material 20 such as manufacturing efficiencies, improved strength, tear resistance and/or liner or filtering properties.

Gasket material may be formed of a plurality of fibres (which may include multicomponent fibres), such as polyethylene terephthalate (PET), nylon or metallic fibres, that may be bound or interlocked to form a sheet or web having channels 34. Gasket material may alternatively be formed of a non-continuous material, such as a plurality of fibres that are deposited to form gasket layer without the fibres being bound or interlocked to one another. Gasket material may alternatively be formed of a sheet, such as a PET, nylon, polymer or metallic sheet, that is perforated to define a plurality of channels 34.

Gasket layer occupies a portion, and preferably a substantial portion of the thickness of the seal formed between sealing layers 24 for containers formed of one or more multilayer materials 20. Channels 34 allow gasket layer 26 to become partially or fully embedded within the material of one or more sealing layers 24 with at least a portion of the material of the sealing layers 24 becoming disposed within channels 34.

The resultant seal formed between sealing layers 24 of one or multilayered materials 20 having embedded gasket layers 26 with superior barrier properties in accordance with the present invention has improved barrier properties along the plane of the seal in the direction of arrow X compared to the seal for conventional multilayered materials MM.

For example, the sealing layer S of a conventional multilayered material MM may be formed of a material having a thickness T and permeability of P. Thus the permeability of the seal formed between identical sealing layers S of two conventional multilayered materials MM is P. A multilayered material 20 for use in the present invention may have a sealing layer 24 formed of a material having a thickness T and permeability of P and a gasket layer 26 formed of a material with a thickness T and permeability of ½P. If gasket layer 26 is fully embedded within sealing layer 24 with half of the material of sealing layer 24 disposed within channels 34 defined in gasket layer 26 then the permeability of the seal formed between identical multilayered materials 20 is ¾ P. The greater the ratio of gasket layer 26 relative to sealing layer 24 through the thickness of the seal, the better the barrier properties for the seal. Note that permeability P in this example is intended to be representative and not a precise amount. The point of the example is to show that superior barrier properties are provided using a multilayered material 20 having a gasket layer 26 with superior barrier properties in accordance with the present invention compared to a conventional multilayered material MM as shown in Figure 1 (Prior art).

Referring back to the other layers that may be desired for multilayer material 20, graphics layer 28 is formed of an ink or other suitable material that is adapted for presenting graphics or one or more background colours as desired for a container formed of multilayered material 20. Outer base layer 30 is preferably formed of a transparent material adapted to cover and protect graphics layer 28 while allowing the graphics or background colours to be visible. Outer base material may be formed of polyolefin or polyester or other materials as known in the art. Support layer 32 is preferably formed of a material that may be formed into a desired shape such as a moldable metal or polymer material.

Gasket layer 26 and barrier layer 22 (and other layers where applicable such as graphics layer 28, outer protective layer 30 and support layer Su) are formed at least in part of materials having melt temperatures that are sufficiently higher than the melt temperature of sealing layer 24 in order that the properties of the respective layers are not adversely effected when multilayered material 20 is heated to or above the melt temperature of sealing layer 24 in order to form a seal. Gasket layer 26 for example may be formed of bicomponent fibres that define channels 34. The bicomponent fibres may include a portion that has a melt temperature that is higher than the melt temperature of sealing layer 24 and a portion that is the same or lower than the melt temperature of sealing layer 24. As a result, when the multilayered material 20 is heated to or above the melt temperature of sealing layer 24, a portion of the bicomponent fibre forming gasket layer 26 may melt (which may enhance the seal formed with sealing layer 24) while the remainder of bicomponent fibre will remain unaffected so as to continue to define channels 34.

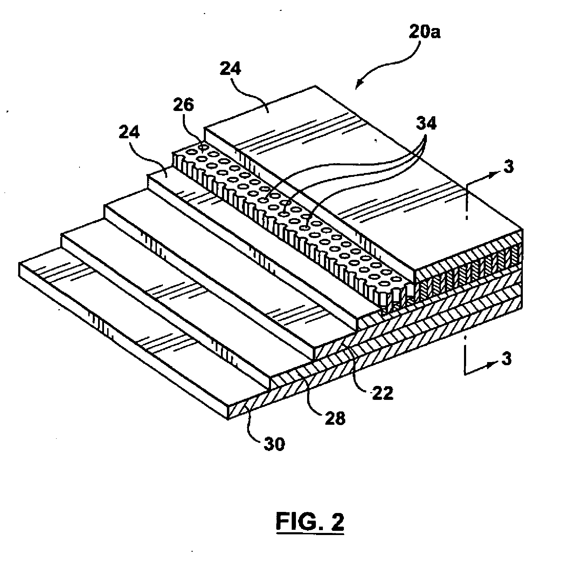

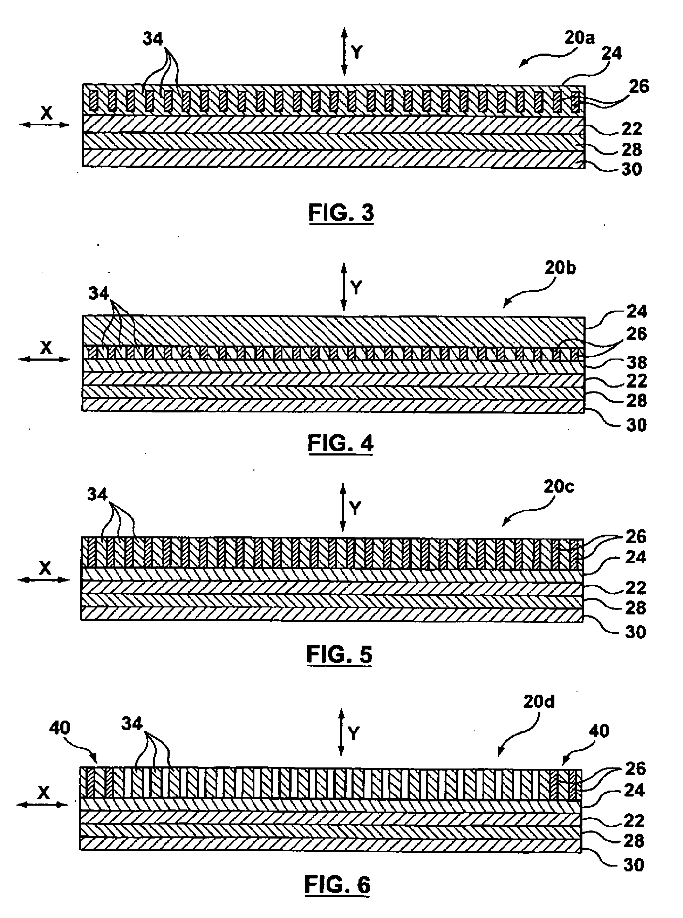

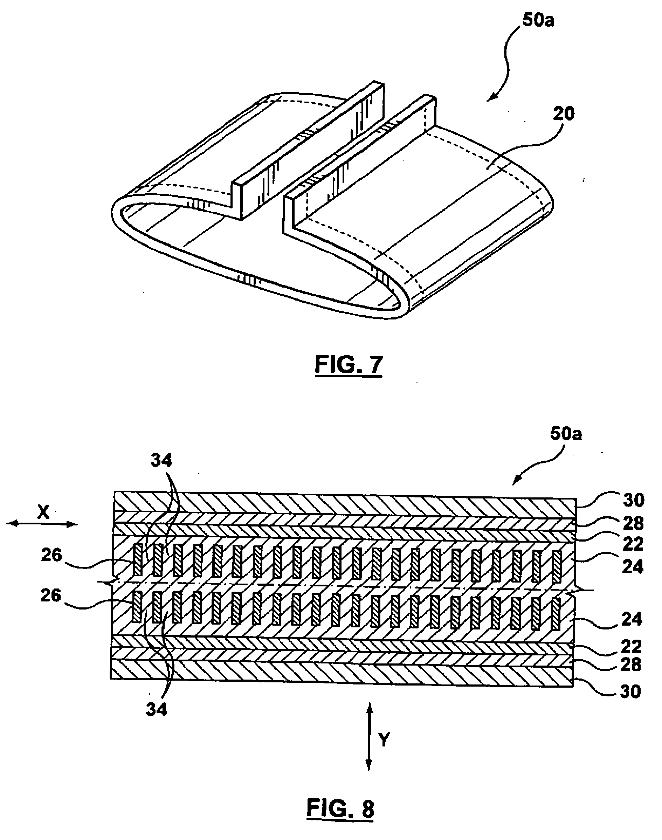

Referring to Figures 2 and 3, a multilayer material 20a for use in the present invention is shown. Multilayer material 20a includes barrier layer 22, sealing layer 24 and gasket layer 26 as well as graphics
layer 28 and outer base layer 30 all as described above. Gasket layer 26 is embedded fully within sealing layer 24. When multilayered material 20a is sealed to another surface, such as the sealing layer 24 of a folded over portion of the same multilayer material 20a, sealing layer 24 is heated to its melt temperature (or higher than its melt temperature but less than melt temperatures of other layers)
and pressed against the abutting surface under a desired pressure for a desired dwell time in order that it may form a seal with the abutting surface (as shown in Figure 8).

For this and the other embodiments described below, it will be appreciated that the desired melt temperature, pressure and dwell time for forming a desired seal are interdependent and also dependent on the type and thickness of materials as well as the manufacturing conditions and choice of manufacturing equipment. For example, if the sealing layer 24 is LDPE, the desired melt temperature may be in the range of 120-220 degrees Celsius (as long as lower than melt temperature for other layers), the desired pressure may be in the range of 138-689 KPa 20-100 psi and the desired dwell time may be in the range of 0.2 milliseconds to three seconds.

Referring to figure 4, an enlarged schematic cross section (that is not necessarily to scale) of another embodiment of multilayer material is shown generally at 20b. Multilayer material 20b includes barrier layer 22, sealing layer 24 and gasket layer 26 as well as graphics layer 28 and outer base layer 30 all as described above. Multilayer material 20b further includes a bonding layer 38 disposed between barrier layer 22 and gasket layer 26 for bonding the two layers together. Bonding layer 38 may be formed of the same material as sealing layer 24 or it may be formed of a different material suitable for bonding gasket layer 26 to barrier layer 22, When multilayered material 20b is sealed to another surface, such as the seating layer 24 of a folded over portion of the same multilayer material 20b, sealing layer 24 is heated to its melt temperature (or higher than its melt temperature but less than melt temperatures of other layers) and pressed against the abutting surface under a desired pressure for a desired dwell time in order that it may flow at least partially, and preferable fully, into channels 34 of gasket layer 26 while maintaining sufficient sealing material to form a seal with the abutting surface. It will be appreciated that a sufficient thickness of sealing layer 24 is required in order to have sufficient material to flow into channels 34 while having sufficient material remaining to seal to the abutting surface. If bonding layer 38 is also formed of the same material as sealing layer 24 then channels 34 may be partially filled with the material from bonding layer 38 and less thickness for sealing layer 24 is required.

Referring to figure 5, an enlarged schematic cross section (that is not necessarily to scale) of another embodiment of multilayer material is shown generally at 20c. Multilayer material 20c includes barrier layer 22, sealing layer 24 and gasket layer 26 as well as graphics layer 28 and outer base layer 30 all as described above. In this embodiment however, sealing layer 24 is disposed against barrier layer 22 and then gasket layer 26 is disposed against sealing layer 24 to form an exterior surface (that in turn is adapted to form an interior surface of a container formed from such multilayered material 20c). In this embodiment, gasket layer 26 is preferably embedded partially within sealing layer 24 with a portion of the material of sealing layer 24 being received within the channels 34. When multilayered material 20c is sealed to another surface, such as the gasket layer 26 of a folded over portion of the same multilayer material 20c, sealing layer 24 is heated to its melt temperature (or higher than its melt temperature but less than melt temperatures of other layers) and pressed against the abutting surface under a desired pressure for a desired dwell time in order that it may flow through the channels 34 of gasket layer 26 to form the seal with the abutting surface. Multilayered material 20c may alternatively be sealed to another material with a sealing layer, such as a conventional multilayered material having a sealing layer on its exterior surface, wherein the sealing layers of both materials are heated to their melt temperatures (or higher than its melt temperature but less than melt temperatures of other layers) and pressed against the abutting surface under a desired pressure for a desired dwell time in order that they may flow through the channels 34 of gasket layer 26 to form the seal. It will be appreciated that a sufficient thickness of sealing layer 24 is required in order to have sufficient material to flow fully through channels 34 to seal to another surface formed of the same multilayer material 20c. If sealing to another material having a sealing layer on its exterior surface then less thickness of sealing layer 24 is required.

Referring to figure 6, an enlarged schematic cross section (that is not necessarily to scale) of another embodiment of multilayer material is shown generally at 20d. Multilayer material 20d includes barrier layer 22, sealing layer 24 and gasket layer 26 as well as graphics layer 28 and outer base layer 30 all as described above. In this embodiment, sealing layer 24 is again disposed against barrier layer 22 and gasket layer 26 is again disposed against sealing layer 24 to form an exterior surface (that in turn is adapted to form an interior surface of a container formed from such multilayered material). In this embodiment however, gasket layer 26 is disposed against but not secured to sealing layer 24 other than at desired distinct sealing points 40. For example, multilayered material 20d may be formed and then subsequently cut into blanks configured to form a desired container or portion of a desired container. Desired sealing points 40 of such blanks (such as portions of the peripheral edge that are intended to subsequently form an edge seal of a container formed from such multilayered material 20d may be heated and sealed in order that gasket layer 26 is secured to, and preferably embedded at least partially within, sealing layer 24. This sealing operation is preferably conducted in conjunction with the operation for cutting the blanks. The resultant blank of multilayered material 20d will have a gasket layer that is secured to the remainder of the multilayered material 20d only at the desired sealing points 40. When multilayered material 20d is sealed to another surface, such as the gasket layer 26 of a folded over portion of the same multilayer material 20d, sealing layer 24 is heated to its melt temperature (or higher than its melt temperature but less than melt temperatures of other layers) and pressed against the abutting surface under a desired pressure for a desired dwell time in order that it may flow through the channels of gasket layer 26 to form the seal with the abutting surface. Multilayered material 20d may alternatively be sealed to an another material with a sealing layer, such as a conventional multilayered material having a sealing layer on its exterior surface, wherein the sealing layers of both materials are heated to their melt temperatures (or higher than its melt temperature but less than melt temperatures of other layers) and pressed against the abutting surface under a desired pressure for a desired dwell time in order that they may flow through the channels 34 of gasket layer to form the seal. It will be appreciated that a sufficient thickness of scaling layer 24 is required in order to have sufficient material to flow fully through channels 34 to seal to another surface formed of the same multilayer material 20c. If sealing to another material having a sealing layer on its exterior surface then less thickness of sealing layer 24 is required.

Referring to Figure 7, an exploded perspective view of a container not in accordance with the present invention is shown at 50a.
Container 50a is in the form of a bag made from a multilayered material 20 , in this example multilayered material 20a.
Container may however have other forms such as a cup shape container with a sealed cover according to the invention. Multilayered material 20 is formed to a desired shape and overlapping abutting surfaces are sealed, by way of a heat seal or other known sealing processes, to define an interior space for containing desired contents. The air within container 50a may be evacuated and/or replaced with an inert gas such as nitrogen prior to sealing of contents within container 50a.

Referring to Figure 8, a magnified schematic cross-sectional view (that is not necessarily to scale) of a sealed edge for container 50a is shown. Material from sealing layers 24 is disposed within channels 34 defined in gasket layers 26. Gasket layers 26 substantially fill the space in the sealed edge between barrier layers 22 and sealing layers 24 to provide improved barrier protection against undesired elements and in particular to deter permeation of undesired elements along the plane of gasket layer 26 as depicted by arrow X.

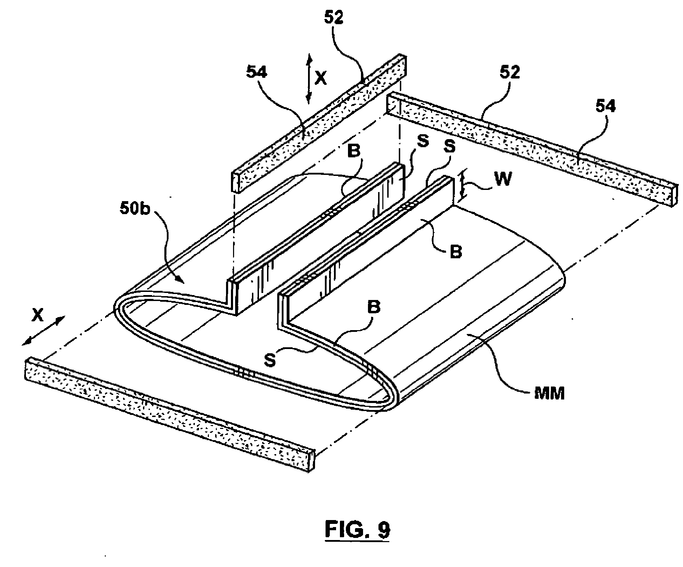

Referring to Figure 9, an exploded perspective view of a container not in accordance with the present invention is shown at 50b.
Container 50b is in the form of a bag that may be made from a conventional multilayered material MM having a seating layer S for sealing abutting surfaces together. Container may however have other forms such as a cup shape container with a sealed cover according to the invention. Container 50b further includes gasket strips 52 that are sized to be disposed between overlapping surfaces of the multilayered material MM prior to sealing. Gasket strips 54 may be elongate strips as shown but may have other shapes, such as a ring shape, adapted for the specific shape or form of the portion of container 50b being sealed. Gasket strips 52 are each formed of a material having channels 54, similar to the material for gasket layer 26 as described above, that are adapted to receive at least a portion of the material of sealing layer S. Gasket strips 52 are adapted to provide barrier protection against undesired elements and in particular are adapted to deter permeation of undesired elements along the plane of gasket strips 52 as depicted by arrow X.

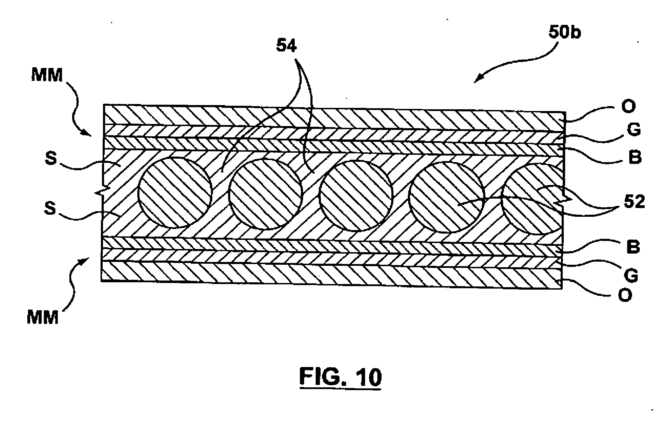

Referring to Figure 10, a magnified schematic cross-sectional view (that is not necessarily to scale) of a sealed edge for container 50b is shown. As shown, material from each of the abutting sealing layers S is received within channels 54 of gasket strip 52 to form the sealed edge. Gasket strip 52 substantially fills the space in the sealed edge between barrier layers B to provide improved barrier protection against undesired elements and in particular to deter permeation of undesired elements along the plane of gasket strip 52 as depicted by arrow X.

Referring to Figure 11, an exploded perspective view of a container 100 in accordance with the invention is shown. Container 100 is in the form of a cup shaped body with a cover that is adapted for use as a single serve beverage capsule. Container 100 includes a body 102, filter 104, ingredients 106 and cover 108.

Body 102 includes a side wall 110 and an end wall 112 together defining an interior space 114 for containing filter 104 and ingredients 106, An opening 116 is defined at one end of body 102. A flange 118 extends about the perimeter of opening 116. An ingredients chamber 119 is defined between filter 104 and opening 116 for receiving ingredients 106.

Filter 104 includes a gasket portion 120 that is adapted to be disposed between flange 118 and cover 108. Filter 104 also includes a filter portion 122 located inwardly from gasket portion 120 that is adapted for filtering a beverage from ingredients 106. Filter 104 is preferably formed from a single sheet of filtration material with gasket portion 120 and filter portion 122 being integral portions thereof.

Filter 104 may be molded prior to disposing in body 102 with filter portion 122 forming a tub or any other desired shape with a smooth or fluted side wall and with gasket portion 120 forming a flange to support filter 104 upon corresponding flange 118 of body 102. Alternatively, as shown in Figure 12, filter 104 may initially extend across interior space 114 or opening 116 of body 102 and is secured to flange 118 prior to being molded, for instance by using a heated mandrel, to form a tub or any other desired shape with a smooth or fluted side wall (as shown in dotted outline).

Ingredients 106 for the exemplary beverage capsule embodiments of container 100 may be coffee grounds, tea leaves, chocolate powder, milk powder, instant coffee or any other ingredients or combinations of ingredients that may be used to prepare a beverage or other consumable product.

Body 102 may be formed of a conventional multilayered material MM that includes a barrier layer B and a sealing layer S as known in the art. Body 102 may further include a support layer Su that is adapted for providing structural support to body 102 so that it may be molded to a desired shape. As well, body may include a graphics layer G and outer base layer O as described earlier.

For example, body 102 may comprise a barrier layer B formed of ethylene vinyl alcohol (EVOH), a sealing layer S formed of polyethylene (PE) or polypropylene (PP) and a support layer Su of high-impact polystyrene (HIPS). Alternatively, body 102 may comprise a barrier layer B of aluminum polyethylene terephthalate (PET) or polylactide (PLA) or a combination of these materials (having sufficient thickness and/or rigidity to provide structural support to body 102) and a sealing layer S of PE or PP.

Filter 104 may be formed from a non-woven fabric filtration material such as polyester, polyethylene or nylon non-woven fabric that is preferably moldable. Non-woven fabric filter 104 preferably includes a plurality of fibres that are bound or interlocked by non-woven manufacturing techniques (preferably spunbond technology) to form a sheet or web having channels 124. Filter 104 may alternatively be formed of a metallic or polymer sheet such as PET or Nylon, which may be perforated to define channels 124 before or after forming a desired filter shape.

Cover 108 is preferably formed of a conventional multilayered material MM that includes a barrier layer B and a sealing layer S. More specifically, cover 108 may comprise an outer base layer 0 of polyolefin or polyester, a graphics layer G of ink applied to a barrier layer B of aluminum foil or metalized polyester and a sealing layer S of polyolefin.

Sealing layer S of body 102 and sealing layer S of cover 108 have respective melt temperatures that are less than the melt temperature of the other portions of the multilayer materials MM and in particular the gasket portion 120 of filter 104, For example, generally, PET has a melting point of approximately 260°C and PE has a melting point of approximately 110°C or PP has a melting point of approximately 160°C.

During assembly of container 100, filter 104 is disposed in body 102 with gasket portion 120 of filter resting upon flange 118. If gasket portion 120 is formed of a sufficiently rigid material to support filter 104 within body 102 during filling of ingredients 106, then ingredients 106 are disposed within filter 104 and cover 108 is positioned over gasket portion 120 to cover opening 116 and partially sealed in place. The air within interior space of capsule 100 is then replaced with an inert gas such as nitrogen. One example of a machine and process for replacing air within a capsule with an inert gas is described in WO 2010/007633. Cover 108 is then fully sealed to body 102 over gasket portion 120 to seal the interior space of capsule. In particular, cover 108 and body 102 are heated to the melt temperature of sealing layers S. The material from sealing layers S at least partially flows through channels 124 of gasket portion 120 to form a seal upon cooling.

If gasket portion 120 is not sufficiently rigid to support filter 104 within body 102 during filling of ingredients 106 then gasket portion 120 is first secured to flange 118 by heating flange 118 to melt temperature of sealing layer S so that the material of sealing layer S at least partially flows into channels 124 of gasket portion 120. Once sealing layer S sufficiently cools to support filter 104 within body 102, then, if filter 104 is not preformed, filter 104 may be molded for instance by using a heated mandrel to a desired shape within interior space 114 of body 102 to form the ingredients chamber 119. Then ingredients 106 are disposed within ingredients chamber 119 of filter 104 and cover 108 is positioned over gasket portion 120 to cover opening 116 and partially sealed in place. The air within interior space of capsule 100 is then evacuated and replaced with an inert gas such as nitrogen for example by using the machine and process noted above. Cover 108 is then fully sealed to body 102 over gasket portion 120 to seal the inferior space of capsule. In particular, cover 108 is heated to the melt temperature of sealing layer S so that the material of sealing layer S at least partially flows into channels 124 of gasket portion 120 to form a seal upon cooling.

While the above description provides examples of one or more processes or apparatuses, it will be appreciated that other processes or apparatuses may be within the scope of the accompanying claims.

## Claims

1. A beverage capsule (100) for use in a beverage preparing machine, said beverage capsule comprising:
a body (102) having a side wall (110) extending from an end wall (112) to an opening (116) to define an interior space, said opening being surrounded by a flange (118);
a filter (104) disposed in said body to define an ingredients chamber (119) between said opening and said filter;
one or more ingredients(106) disposed in said ingredients chamber for preparing a desired beverage; and
a cover (108) for covering said opening;
**characterized in that** said filter includes a gasket portion (120) disposed between said flange and said cover, said gasket portion having a plurality of channels (124) containing a sealing material (S) adapted for sealing said gasket portion between said flange and said cover.

2. A beverage capsule as claimed in claim 1, wherein said gasket portion has a higher melt temperature than said sealing material.

3. A beverage capsule as claimed in claim 1 or claim 2, wherein said body is formed of a multilayer material having (i) a barrier layer (B) formed of a material adapted for deterring one or more undesired elements from passing through the barrier layer and (ii) a sealing layer (S) formed of at least a portion of said sealing material.

4. A beverage capsule according to any preceding claim, wherein said cover is formed of a multilayer material having (i) a barrier layer formed of a material adapted for deterring one or more undesired elements from passing through the barrier layer and (ii) a sealing layer formed of at least a portion of said sealing material.

5. A beverage capsule according to any preceding claim, wherein said filter is formed of a moldable non-woven filter material.

6. A beverage capsule according to any preceding claim, wherein said filter is formed from a material that has been perforated to define said channels.

7. A beverage capsule according to any preceding claim, wherein the ingredient is selected from the group consisting of coffee grounds, tea leaves, chocolate powder, milk powder, instant coffee and combinations thereof.

8. A method for making a beverage capsule for use in a beverage preparing machine, said method comprising the steps of:
heat sealing a gasket portion of a moldable filter to a flange of a body, said body having a side wall extending from an end wall to an opening to define an interior space, said opening being surrounded by said flange;
molding said filter to a desired shape within said interior space to define an ingredients chamber between said opening and said filter;
filling said ingredients chamber with a desired amount of ingredients; and
heat sealing a cover to said gasket portion for covering said opening;
wherein said body and said cover each comprise a multilayer material having (i) a barrier layer formed of a material adapted for deterring one or more undesired elements from passing through the barrier layer and (ii) a sealing layer formed of a material adapted for sealing to another surface;
and wherein said gasket portion has a plurality of channels for receiving at least a portion of said sealing material for said body and said cover, said gasket portion having a higher melt temperature than said sealing layer of said body and said cover.

9. A method of making a beverage capsule as claimed in claim 8, further comprising the step of replacing the air within said capsule with an inert gas prior to heat sealing said cover to said gasket portion to cover said opening and seal said interior space.

10. A method of making a beverage capsule as claimed in claim 8 or claim 9, wherein said cover is partially sealed to said gasket portion to hold said cover in place prior to the step of replacing the air within said capsule with an inert gas, said cover thereafter being fully sealed to said gasket portion to seal said interior space.

11. A method of making a beverage capsule as claimed in any of claims 8 to 10, wherein said moldable filter is formed of a moldable non-woven filter material.

12. A method of making a beverage capsule as claimed in any of claims 8 to 11, wherein said moldable filter is formed from a moldable material that has been perforated to define said channels.

13. A method of making a beverage capsule as claimed in any of claims 8 to 12, wherein said gasket portion of said moldable filter has been perforated to define said channels.

14. A beverage capsule manufactured according to any of claims 8 to 13, filled with an amount of an ingredient.

15. The beverage capsule of claim 14, wherein the ingredient is selected from the group consisting of coffee grounds, tea leaves, chocolate powder, milk powder, instant coffee and combinations thereof.

## Patentansprüche

1. Eine Getränkekapsel (100) zur Verwendung in einer Maschine zur Getränkezubereitung, die genannte Getränkekapsel aufweisend:
einen Körper (102), der eine Seitenwand (110) hat, sich erstreckend von einer Endwand (112) zu einer Öffnung (116) um einen Innenraum zu definieren, mit der genannten Öffnung umgeben von einem Flansch (118);
einen Filter (104) angeordnet in dem genannten Körper, um eine Zutatenkammer (119) zwischen der Öffnung und dem genannten Filter zu definieren,
eine oder mehrere Zutaten (106) angeordnet in der genannten Zutatenkammer zum Zubereiten eines gewünschten Getränks; und
eine Abdeckung (108) zum Abdecken der genannten Öffnung;
**dadurch gekennzeichnet, dass** der genannte Filter ein Dichtungsteil (120) umfasst, der zwischen dem genannten Flansch und der genannten Abdeckung angeordnet ist und der genannte Dichtungsteil eine Vielzahl an Kanälen (124) hat, welche ein Dichtungsmaterial (S) enthalten, das ausgebildet ist, zur Abdichtung des genannten Dichtungsteils zwischen dem genannten Flansch und der genannten Abdeckung.

2. Eine Getränkekapsel wie beansprucht in Anspruch 1, wobei der genannte Dichtungsteil eine höhere Schmelztemperatur als das genannte Dichtungsmaterial hat.

3. Eine Getränkekapsel wie beansprucht in Anspruch 1 oder Anspruch 2, wobei der genannte Körper gebildet ist aus einem Mehrschicht-Material, das (i) eine Barriereschicht (B) hat, gebildet aus einem Material, das dazu ausgebildet ist, ein oder mehr unerwünschte Elemente davon abzuhalten durch die Barriereschicht zu passieren und (ii) eine Dichtungsschicht (S), gebildet aus mindestens einem Teil des genannten Dichtungsmaterials.

4. Eine Getränkekapsel nach einem vorherigen Anspruch, wobei die genannte Abdeckung gebildet ist aus einem Mehrschicht-Material, das (i) eine Barriereschicht hat, gebildet aus einem Material, das dazu ausgebildet, ein oder mehr unerwünschte Elemente davon abzuhalten durch die Barriereschicht zu passieren und (ii) einer Dichtungsschicht, gebildet aus mindestens einem Teil des genannten Dichtungsmaterials.

5. Eine Getränkekapsel nach einem vorherigen Anspruch, wobei der genannte Filter gebildet ist aus einem formbaren, nicht-gewobenen Filter-Material.

6. Eine Getränkekapsel nach einem vorherigen Anspruch, wobei der genannte Filter gebildet ist aus einem Material, das perforiert worden ist, um die genannten Kanäle zu definieren.

7. Eine Getränkekapsel nach einem vorherigen Anspruch, wobei die Zutaten ausgewählt sind aus einer Gruppe bestehend aus Kaffeemehl, Teeblätter, Schokoladenpulver, Milchpulver, löslichem Kaffee und Kombinationen von diesen.

8. Ein Verfahren zum Herstellen einer Getränkekapsel zur Verwendung in einer Maschine zur Getränkezubereitung, wobei das genannte Verfahren die Schritte aufweist:
Heißverschweißen des Dichtungsteils eines formbaren Filters an den Flansch eines Körpers, wobei der genannten Körper eine Seitenwand hat, sich erstreckend von einer Endwand zu einer Öffnung, um einen Innenraum zu definieren, mit der genannten Öffnung umgeben von einem Flansch;
Formen des genannten Filters zu einer gewünschten Form innerhalb des genannten Innenraums, um eine Zutatenkammer zwischen der genannten Öffnung und dem genannten Filter zu definieren;
Füllen der genannten Zutatenkammer mit einer gewünschten Menge an Zutaten; und
Heißverschweißen einer Abdeckung an den genannten Dichtungsteil, um die genannte Öffnung abzudecken;
wobei der genannte Körper und die genannte Abdeckung ein Mehrschicht-Material aufweist, das (i) eine Barriereschicht hat, gebildet aus einem Material, das dazu ausgebildet ist, ein oder mehr unerwünschte Elemente davon abzuhalten durch die Barriereschicht zu passieren und (ii) eine Dichtungsschicht, gebildet aus einem Material, das dazu ausgebildet ist, zu einer anderen Fläche abzudichten;
und wobei der genannte Dichtungsteil eine Vielzahl an Kanäle hat zum Aufnehmen wenigstens eines Teils des genannten Dichtungsmaterials für den genannten Körper und die genannte Abdeckung, wobei der genannte Dichtungsteil eine höhere Schmelztemperatur hat als die Dichtungsfläche des genannten Körpers und der genannten Abdeckung.

9. Ein Verfahren zum Herstellen einer Getränkekapsel wie beansprucht in Anspruch 8, weiter aufweisend den Schritt zum Ersetzen der Luft innerhalb der genannten Kapsel mittels einem Inert-Gas vor dem Heißverschweißen der genannten Abdeckung an den genannten Dichtungsteil, um die genannte Öffnung abzudecken und den genannten Innenraum abzudichten.

10. Ein Verfahren zum Herstellen einer Getränkekapsel wie beansprucht in Anspruch 8 oder Anspruch 9, wobei die genannte Abdeckung teilweise an dem genannten Dichtungsteil gedichtet ist, um die genannte Abdeckung vor dem Schritt des Ersetzens der Luft innerhalb der genannten Kapsel mittels eines Inert-Gases in Position zu halten und die genannte Abdeckung danach vollständig an dem genannten Dichtungsteil gedichtet wird, um den genannten Innenraum zu verschließen.

11. Ein Verfahren zum Herstellen einer Getränkekapsel nach einem der Ansprüche 8 bis 10, wobei der genannte formbare Filter gebildet ist aus einem formbaren, nichtgewobenen Filter-Material.

12. Ein Verfahren zum Herstellen einer Getränkekapsel nach einem der Ansprüche 8 bis 11, wobei der genannte formbare Filter gebildet ist aus einem formbaren Material, das perforiert worden ist, um die genannten Kanäle zu definieren.

13. Ein Verfahren zum Herstellen einer Getränkekapsel nach einem der Ansprüche 8 bis 11, wobei der genannte Dichtungsteil des genannten formbaren Filters gebildet ist aus einem formbaren Material, das perforiert worden ist, um die genannten Kanäle zu definieren.

14. Eine Getränkekapsel hergestellt nach einem der Ansprüche 8 bis 13, gefüllt mit einer Menge einer Zutat.

15. Die Getränkekapsel von Anspruch 14, wobei die Zutat ausgewählt ist aus einer Gruppe bestehend aus Kaffeemehl, Teeblätter, Schokoladenpulver, Milchpulver, löslichem Kaffee und Kombinationen von diesen.

## Revendications

1. Une capsule pour boisson (100) destinée à être utilisée dans une machine de préparation de boissons, ladite capsule pour boisson comprenant :
un corps (102) ayant une paroi latérale (110) s'étendant depuis une paroi terminale (112) jusqu'à une ouverture (116) définissant un espace intérieur, ladite ouverture étant entourée par une collerette (118) ;
un filtre (104) disposé dans ledit corps pour définir une chambre d'ingrédients (116) entre ladite ouverture et ledit filtre ;
un ou plusieurs ingrédients (106) disposés dans ladite chambre d'ingrédients pour préparer une boisson désirée ; et
un couvercle pour refermer ladite ouverture ;
**caractérisée en ce que** ledit filtre inclut une partie formant joint d'étanchéité (120) entre ladite collerette et ledit couvercle, ladite partie formant joint d'étanchéité comportant une pluralité de canaux (124) constituée d'un matériau de scellement (S) adapté pour sceller ladite partie formant joint d'étanchéité entre ladite collerette et ledit couvercle.

2. Une capsule pour boisson selon la revendication 1, dans laquelle ladite partie formant joint d'étanchéité a une température de fusion plus élevée que ledit matériau de scellement.

3. Une capsule pour boisson selon la revendication 1 ou la revendication 2, dans laquelle ledit corps est formé d'un matériau multicouche ayant (i) une couche formant barrière (B) formée d'un matériau adapté pour empêcher un ou plusieurs éléments indésirables de traverser la couche formant barrière et (ii) une couche de scellement (S) formée d'au moins une partie dudit matériau de scellement.

4. Une capsule pour boisson selon l'une quelconque des revendications précédentes, dans laquelle ledit couvercle est formé d'un matériau multicouche ayant (i) une couche formant barrière formée d'un matériau adapté pour empêcher un ou plusieurs éléments indésirables de traverser la couche formant barrière et (ii) une couche de scellement formée d'au moins une partie dudit matériau de scellement.

5. Une capsule pour boisson selon l'une quelconque des revendications précédentes, dans laquelle ledit filtre est formé d'un matériau non-tissé moulable.

6. Une capsule pour boisson selon l'une quelconque des revendications précédentes, dans laquelle ledit filtre est formé d'un matériau qui a été perforé pour définir lesdits canaux.

7. Une capsule pour boisson selon l'une quelconque des revendications précédentes, dans laquelle l'ingrédient est choisi dans le groupe consistant en café moulu, feuilles de thé, chocolat en poudre, lait en poudre, café soluble et leurs combinaisons.

8. Une méthode de fabrication d'une capsule pour boisson destinée à être utilisée dans une machine de préparation de boissons, ladite méthode comprenant les étapes de:
scellement à chaud d'une partie formant joint d'étanchéité d'un filtre moulable à la collerette d'un corps, ledit corps ayant une paroi latérale s'étendant depuis une paroi terminale jusqu'à une ouverture pour définir un espace intérieur, ladite ouverture étant entourée par ladite collerette ;
moulage dudit filtre en une forme désirée dans ledit espace intérieur pour définir une chambre d'ingrédients entre ladite ouverture et ledit filtre ;
remplissage de ladite chambre d'ingrédients par une quantité désirée d'ingrédients ; et
scellement à chaud d'un couvercle à ladite partie formant joint d'étanchéité pour refermer ladite ouverture ;
dans laquelle ledit corps et ledit couvercle comprennent chacun un matériau multicouche ayant (i) une couche formant barrière formée dans un matériau adapté pour empêcher un ou plusieurs éléments indésirables de traverser la couche formant barrière et (ii) une couche de scellement formée d'un matériau adapté pour être scellée à une autre surface ;
et dans laquelle ladite partie formant joint d'étanchéité comporte une pluralité de canaux pour recevoir au moins une partie dudit matériau de scellement dudit corps et dudit couvercle, ladite partie formant joint d'étanchéité ayant une température de fusion plus élevée que ladite couche de scellement dudit corps et dudit couvercle.

9. Une méthode de fabrication d'une capsule pour boisson selon la revendication 8, comprenant en outre l'étape de remplacement de l'air dans ladite capsule par un gaz inerte avant le scellement à chaud dudit couvercle sur ladite partie formant joint d'étanchéité pour refermer ladite ouverture et sceller ledit espace intérieur.

10. Une méthode de fabrication d'une capsule pour boisson selon la revendication 8 ou la revendication 9, dans laquelle ledit couvercle est partiellement scellé à ladite partie formant joint d'étanchéité pour tenir ledit couvercle en place avant l'étape de remplacement de l'air contenu dans ladite capsule par un gaz inerte, ledit couvercle étant ensuite totalement scellé à ladite partie formant joint d'étanchéité pour sceller ledit espace intérieur.

11. Une méthode de fabrication d'une capsule pour boisson selon l'une quelconque des revendications 8 à 10, dans laquelle le filtre moulable est formé d'un matériau non-tissé moulable.

12. Une méthode de fabrication d'une capsule pour boisson selon l'une quelconque des revendications 8 à 11, dans laquelle ledit filtre moulable est formé d'un matériau moulable qui a été perforé pour définir les dits canaux.

13. Une méthode de fabrication d'une capsule pour boisson selon l'une quelconque des revendications 8 à 12, dans laquelle ladite partie formant joint d'étanchéité dudit filtre moulable a été perforée pour définir les dits canaux.

14. Une méthode de fabrication d'une capsule pour boisson selon l'une quelconque des revendications 8 à 13, dans laquelle ladite capsule est remplie d'une quantité d'un ingrédient.

15. Une capsule pour boisson selon la revendication 14, dans laquelle l'ingrédient est choisi dans le groupe consistant en café moulu, feuilles de thé, chocolat en poudre, lait en poudre, café soluble et leurs combinaisons.
